# EUROPÄISCHE PATENTANMELDUNG

(11) **EP 3 435 267 A1**
(43) Veröffentlichungstag der Anmeldung: **30.01.2019**
(21) Anmeldenummer: 18180812.2
(22) Anmeldetag: 29.06.2018
(51) Int. Cl.: G06F 21/32, G06F 3/01, G06F 3/0488

(54) **VERFAHREN ZUM AUTHENTIFIZIEREN EINES BENUTZERS EINER TECHNISCHEN EINRICHTUNG MITTELS BIOMETRIE UND GESTENERKENUNG**

(30) Priorität: 25.07.2017 DE 102017116774
(71) Anmelder: Bundesdruckerei GmbH, 10969 Berlin (DE)
(72) Erfinder: Beuthel, Marie, 12043 Berlin (DE); Wohlauf, Anne, 13359 Berlin (DE); Raab, Lorenz, 10435 Berlin (DE)
(74) Vertreter: Mammel und Maser

(57) **Zusammenfassung**

Die Erfindung betrifft ein Verfahren zum Authentifizieren eines Benutzers einer technischen Einrichtung (14), wobei zum Authentifizieren des Benutzers wenigstens ein biometrisches Merkmal des Benutzers durch eine Authentifizierungseinrichtung (11) erfasst wird, das wenigstens eine erfasste biometrische Merkmal mit einem in der Authentifizierungseinrichtung (11) hinterlegtem biometrischen Merkmal verglichen wird, wenigstens eine vom Benutzer ausgeführte individuelle Geste (13) durch die Authentifizierungseinrichtung (11) erfasst wird, die wenigstens eine erfasste individuelle Geste (13) mit einer in der Authentifizierungseinrichtung (11) hinterlegten Geste (13) verglichen wird und der Benutzer bei einer erfolgreichen Verifikation des wenigstens einen erfassten biometrischen Merkmals und der wenigstens einen erfassten individuellen Geste (13), eine Zugangsberechtigung zur Bedienung der technischen Einrichtung (14) erhält.

## Beschreibung

Die Erfindung betrifft ein Verfahren zum Authentifizieren eines Benutzers einer technischen Einrichtung.

Es sind Verfahren zum Authentifizieren eines Benutzers durch eine Authentifizierungseinrichtung bekannt, bei welchen biometrische Daten des Benutzers, beispielsweise dessen Fingerabdruck, erfasst und überprüft werden, um eine Berechtigung des Benutzers für einen Zutritt in einem gesicherten Raum zu ermöglichen oder zur Bedienung einer technischen Einrichtung sicherzustellen. Durch eine solche Authentifizierungseinrichtung kann der Benutzer auf eine komfortable Art und Weise Zugang zu einer technischen Einrichtung, Anlage oder einem Gebäude erhalten, ohne dass dieser einen zusätzlichen Schlüssel, eine Key-Card oder ähnliches bei sich tragen muss.

Des Weiteren sind zur Bedienung von technischen Einrichtungen Verfahren bekannt, bei denen eine Bewegungsgeste eines Benutzers eine Steuerung der technischen Einrichtung ermöglicht. Hierzu ist einer bestimmten Bewegungsgeste eine individuelle Funktion der technischen Einrichtung zugeordnet, sodass beim Ausführen dieser Geste durch den Benutzer die entsprechende Funktion der technischen Einrichtung ausgeführt wird. Beispielsweise kann bei Smartphones oder Tablet Computern auf diese Weise durch eine Berührung oder Bewegung auf einem sensitiven Display des Smartphones eine bestimmte Funktion aufgerufen werden. Zudem können in modernen Kraftfahrzeugen über eine Kamera bestimmte Handbewegungen des Benutzers registriert werden, um beispielsweise das Navigationssystem, Radio oder Telefon des Fahrzeugs zu bedienen. Solche Gestensteuerungen bieten dem Benutzer einen hohen Komfortgewinn bei der Bedienung, ermöglichen jedoch keine Erkennung einer gegebenenfalls nötigen Berechtigung des Benutzers.

Aufgabe der Erfindung ist es, ein Verfahren zum Authentifizieren eines Benutzers einer technischen Einrichtung sowie die Verwendung einer Authentifizierungseinrichtung zum Authentifizieren des Benutzers vorzuschlagen, wodurch eine Berechtigungsüberprüfung des Benutzers einer technischen Einrichtung mit einer hohen Sicherheit gewährleistet ist.

Diese Aufgabe wird durch ein Verfahren zum Authentifizieren eines Benutzers einer technischen Einrichtung und zum Ausführen zumindest einer individuellen Funktion der technischen Einrichtung gelöst, bei welchem zum Authentifizieren des Benutzers wenigstens ein biometrisches Merkmal des Benutzers durch eine Authentifizierungseinrichtung geprüft wird und der Benutzer zum Ausführen der zumindest einen individuellen Funktion der technischen Einrichtung eine mit der zumindest einen individuellen Funktion verknüpfte Geste ausführt, die von der Authentifizierungseinrichtung registriert wird. Durch ein solches Verfahren kann eine hohe Sicherheit erreicht werden, da zur erfolgreichen Authentifizierung zum Bedienen der technischen Einrichtung sowohl das biometrische Merkmal des Benutzers als auch die Kenntnis über die erforderliche Geste notwendig sind. Dabei kann dieses Authentifizierungsverfahren bei einer Vielzahl unterschiedlicher technischer Einrichtungen zum Einsatz kommen, wie zum Beispiel bei einem Computer oder Mobile Device (Smartphone, Tablet, Wearable u.ä.), bei Produktions- und Fertigungsanlagen, Werkzeugmaschinen, Fahrzeugen oder zur Überprüfung einer Zugangsberechtigung zu einem Gebäude, Raum oder ähnlichem. Auch das Implementieren des erfindungsgemäßen Verfahrens auf einer Berechtigungskarte (ID-Card oder Key-Card) ist möglich, indem beispielsweise die Authentifizierungseinrichtung zusammen mit einem Fingerabdrucksensor auf oder in der Berechtigungskarte integriert werden. Dadurch kann eine besonders hohe Sicherheit einer Berechtigungsüberprüfung erreicht werden, da für eine positive Authentifizierung des berechtigten Benutzers neben dem Besitz der Berechtigungskarte zusätzlich dessen biometrisches Merkmal sowie das Wissen über die erforderliche Geste notwendig sind. Dabei bietet diese erfindungsgemäße Lösung einen hohen Datenschutz, da die Verarbeitung sensibler Daten ausschließlich auf der Karte erfolgt.

In einer vorteilhaften Weiterbildung des Verfahrens ist vorgesehen, dass das wenigstens eine biometrische Merkmal des Benutzers, insbesondere ein biometrisches Merkmal wenigstens einer Hand oder wenigstens eines Fingers des Benutzers, über ein Sensorfeldfeld der Authentifizierungseinrichtung erfasst wird und die wenigstens eine individuelle Geste mit der wenigstens einen Hand oder dem wenigstens einen Finger des Benutzers auf dem Sensorfeldfeld der Authentifizierungseinrichtung ausgeführt wird. Als biometrisches Merkmal der wenigstens einen Hand oder des wenigstens einen Fingers des Benutzers kann beispielsweise der Abdruck der Papillarleisten eines oder mehrerer Finger des Benutzers, auch als Fingerabdruck bezeichnet, dienen. Neben den charakteristischen Gabelungen oder Linienenden können zusätzlich die Pohren sensiert werden. Alternativ oder ergänzend ist es ebenso möglich, dass als biometrisches Merkmal die Handgeometrie, Handlinienstruktur und/oder Handvenenstruktur des Benutzers, oder vergleichbare biometrische Merkmale über das Sensorfeld der Authentifizierungseinrichtung erfasst werden. Durch die Verwendung des Sensorfelds ist zudem die gleichzeitige Erfassung des biometrischen Merkmals und das Ausführen der individuellen Geste ermöglicht. Das Sensorfeld kann auf verschiedenen Technologien basieren. Bevorzugt sind optische, kapazitive, thermische oder Ultraschall-Sensorfelder.

Eine weitere vorteilhafte Weiterbildung des Verfahrens sieht vor, dass die wenigstens eine individuelle Geste mit zumindest einer individuellen Funktion der technischen Einrichtung verknüpft ist und durch das Ausführen, Erfassen und erfolgreiche Verifizieren der wenigstens einen individuellen Geste, die zumindest eine verknüpfte individuelle Funktion der technischen Einrichtung angesteuert wird. Dadurch bietet dieses Verfahren neben der erhöhten Sicherheit einen erheblichen Komfortgewinn und eine Zeitersparnis bei der Bedienung der technischen Einrichtung, da durch die Verknüpfung der Geste mit einer individuellen Funktion der technischen Einrichtung ein unmittelbarer Zugriff auf unterschiedliche Funktionen ermöglicht wird.

Eine Ausgestaltung des Verfahrens sieht vor, dass die wenigstens eine individuelle Geste durch eine definierte Zeitdauer des Auflegens der wenigstens einen Hand oder des wenigstens einen Fingers des Benutzers auf das Sensorfeldfeld der Authentifizierungseinrichtung ausgeführt wird. Dadurch ist eine sehr einfache individuelle Geste gebildet, die lediglich dadurch definiert wird, dass die wenigstens eine Hand oder der wenigstens eine Finger des Benutzers eine vorgegebene Zeitspanne auf dem Sensorfeld der Authentifizierungseinrichtung verbleibt. Solche individuellen Gesten unterscheiden sich folglich lediglich dadurch, dass die wenigstens eine Hand oder der wenigstens eine Finger unterschiedlich lang auf das Sensorfeld aufgelegt werden.

In einer weiteren Ausgestaltung des Verfahrens ist vorgesehen, dass die wenigstens eine individuelle Geste durch ein Auflegen der wenigstens einen Hand oder des wenigstens einen Fingers des Benutzers in einer definierten Ausrichtung, Position und/oder Anordnung auf dem Sensorfeldfeld der Authentifizierungseinrichtung ausgeführt wird. Durch eine individuelle Geste, die einer bestimmten Ausrichtung, Position und/oder Anordnung auf dem Sensorfeld entspricht, kann eine einfache und für den Benutzer intuitive Verknüpfung zu einer individuellen Funktion hergestellt werden. Hierbei können im Alltag verwendete Bewegungs- oder Verhaltensmuster in der Weise auf die individuelle Geste des Verfahrens übertragen werden, dass beispielsweise ein nach oben oder nach unten weisender Daumen einer positiven oder negativen Zustimmung zu einem Ereignis (bei Wahlen, Abstimmungen, Petitionen oder Bewertungen) entspricht. Ebenso kann eine bestimmte Ausrichtung des Fingers auf dem Sensorfeld einer individuellen Funktion der technischen Einrichtung zugeordnet werden, sodass beispielsweise durch eine Ausrichtung des Fingers in 3:00 Uhr, 6:00 Uhr oder 9:00 Uhr Stellung, der Programmierung eines Timers der technischen Einrichtung von 15, 30 oder 45 Sekunden/Minuten entspricht. Hierbei sind eine Vielzahl von Programmierungs- und Kombinationsmöglichkeiten möglich, die nicht abschließend aufgezählt werden können.

Eine vorteilhafte Weiterbildung des Verfahrens sieht vor, dass die wenigstens eine individuelle Geste durch eine definierte Wisch- oder Drehbewegung, insbesondere eine horizontale, vertikale, diagonale, kreisförmige oder komplexe Wischbewegung, oder eine Kombination aus einer solchen Wisch- und Drehbewegung mit der wenigstens einen Hand oder dem wenigstens einen Finger des Benutzers auf dem Sensorfeldfeld der Authentifizierungseinrichtung ausgeführt wird. Solche Wisch- oder Drehbewegungen ermöglichen eine Vielzahl unterschiedlicher Bewegungsmuster zum Definieren einer Geste und stellen deshalb auf der einen Seite ein starkes Sicherheitsmerkmal dar und bieten auf der anderen Seite eine hohe Variantenvielfalt zur Verknüpfung mit einer individuellen Funktion der technischen Einrichtung.

In einer weiteren Ausgestaltung des Verfahrens kann vorgesehen sein, dass die wenigstens eine individuelle Geste durch ein wiederholtes Berühren des Sensorfeldfeldes der Authentifizierungseinrichtung mit der wenigstens einen Hand oder dem wenigstens einen Finger des Benutzers ausgeführt wird. Dadurch können Gesten gebildet werden, die aus einem oder einem mehrmaligen Antippen des Sensorfeldes bestehen. Auf diese Weise können Kombinationen ähnlich eines Morsecodes ausgestaltet werden. Da es für solche Morsecodes eine Vielzahl von Kombinationsmöglichkeiten gibt, wird dadurch eine sehr hohe Sicherheit des Authentifizierungsverfahrens erreicht.

Eine vorteilhafte Weiterbildung des Verfahrens sieht des Weiteren vor, dass das Erfassen des biometrischen Merkmals der wenigstens einen Hand oder des wenigstens einen Fingers des Benutzers und das Erfassen der wenigstens einen individuellen Geste in einer Aufsetzbewegung auf dem Sensorfeldfeld der Authentifizierungseinrichtung erfolgt. Dadurch ist eine schnelle und komfortable Bedienung der technischen Einrichtung ermöglicht, da sowohl die Authentifizierung als auch das Ausführen der Geste in einem Verfahrensschritt ermöglicht ist.

Eine weitere bevorzugte Weiterbildung des Verfahrens sieht vor, dass das Erfassen des biometrischen Merkmals der wenigstens einen Hand oder des wenigstens einen Fingers des Benutzers und das Erfassen der wenigstens einen individuellen Geste simultan auf dem Sensorfeldfeld der Authentifizierungseinrichtung erfolgt. Dadurch ist eine noch schnellere Bedienung der technischen Einrichtung ermöglicht, da die Authentifizierung des biometrischen Merkmals des Benutzers während des Ausführens der Geste auf dem Sensorfeld der Authentifizierungseinrichtung erfasst wird.

Eine besonders bevorzugte Ausgestaltung des Verfahrens sieht vor, dass mehrere individuelle Gesten, vorzugsweise vom Benutzer frei definierbar, in der Authentifizierungseinrichtung oder der technischen Einrichtung gespeichert werden und vorzugsweise jede individuelle Geste mit jeweils einer individuellen Funktion der technischen Einrichtung verknüpft wird. Dadurch wird eine hohe Flexibilität und an Anpassbarkeit des Verfahrens durch den Benutzer erreicht, indem dieser jeder von ihm beliebig wählbaren Geste eine zugehörige Funktion der technischen Einrichtung zuordnen kann. Dadurch kann der Benutzer die Steuerung bzw. Bedienung der technischen Einrichtung flexibel an seine individuellen Bedürfnisse anpassen. Durch die vielfältigen Kombinationsmöglichkeiten individueller Gesten, lässt sich durch diese ein hoher Funktionsumfang unmittelbar ansteuern.

Die der Erfindung zugrunde liegende Aufgabe wird des Weiteren durch die Verwendung einer Authentifizierungseinrichtung zum Authentifizieren eines Benutzers einer technischen Einrichtung, insbesondere einer in einer Berechtigungskarte, einem Computer, einem Mobile Device, einem Wearable Computer, einer Werkzeugmaschine oder einem Kraftfahrzeug integrierten Authentifizierungseinrichtung gelöst, wobei die Authentifizierung des Benutzers gemäß des Verfahrens nach einem der zuvor beschriebenen Ausführungsformen erfolgt. Durch die Verwendung einer solchen Authentifizierungseinrichtung, bei welcher der Benutzer durch das erfindungsgemäße Verfahren authentifiziert wird, kann neben einem hohen Maß an Sicherheit zur Überprüfung der Berechtigung des Benutzers auch ein hoher Datenschutz erreicht werden. Die Authentifizierungsdaten werden bevorzugt ausschließlich in der Authentifizierungseinrichtung verarbeitet. Dabei kann die Authentifizierungseinrichtung beispielsweise in der Berechtigungskarte integriert sein oder an der Berechtigungskarte vorgesehen sein, sodass die Authentifizierungsdaten ausschließlich von der Berechtigungskarte verarbeitet werden und keine Übertragung von Authentifizierungsdaten an weitere Geräte erfolgt. Durch die interne Verarbeitung der Authentifizierungsdaten kann ein hoher Schutz dieser sensiblen Daten erreicht werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Darstellung eines Sensorfelds einer Authentifizierungseinrichtung mit einem auf dem Sensorfeld aufgelegten Finger eines Benutzers,
Figur 2 eine weitere schematische Darstellung des Sensorfelds mit zwei auf dem Sensorfeld aufgelegten Fingern des Benutzers,
Figur 3 eine schematische Darstellung einer Berechtigungskarte mit einer integrierten Authentifizierungseinrichtung,
Figur 4 eine schematische Darstellung einer technischen Einrichtung am Beispiel eines Smartphones mit einer Authentifizierungseinrichtung und
Figur 5 eine weitere schematische Darstellung einer technischen Einrichtung am Beispiel einer Werkzeugmaschine mit einer Authentifizierungseinrichtung.

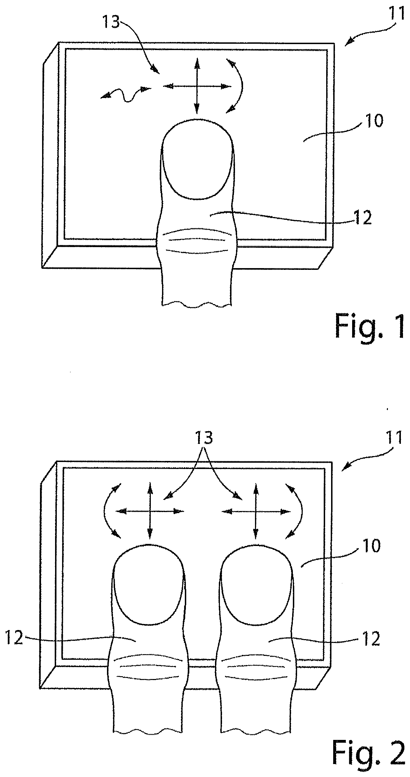

Figur 1 zeigt eine schematische Darstellung eines Sensorfelds 10 einer Authentifizierungseinrichtung 11 einer in Figur 1 nicht näher dargestellten technischen Einrichtung, bei der das erfindungsgemäße Verfahren Anwendung findet. Eine solche Authentifizierungseinrichtung 11 kann in einer Vielzahl verschiedener technischer Einrichtungen vorgesehen werden. Exemplarisch seien hier z.B. Computer und Mobile Devices, wie Smartphones, Tablets oder sogenannte Wearable Computer oder auch Berechtigungskarten, wie ID- oder Key-Cards genannt, wie auch Werkzeugmaschinen, Produktions- und Fertigungsanlagen, Kraftfahrzeuge oder Berichtigungseinrichtungen, die Zugang zu Gebäuden oder Sicherheitszonen, Serverräumen und ähnlichem gewähren. Auch eine Integration der Authentifizierungseinrichtung 11 in die Kleidung ist möglich. Folglich sind eine Vielzahl technischer Einrichtungen mit einer solchen Authentifizierungseinrichtung 11 kombinierbar, weshalb die beispielhafte Aufzählung als nicht abschließend zu betrachten ist.

Neben dem Sensorfeld 10 der Authentifizierungseinrichtung 11 zeigt Figur 1 einen Finger 12 eines nicht näher dargestellten Benutzers. Bei dem erfindungsgemäßen Verfahren ist vorgesehen, dass der Benutzer zur Authentifizierung zunächst einen seiner Finger 12 oder seinen Daumen auf das Sensorfeld 10 der Authentifizierungseinrichtung 11 aufsetzt. Alternativ kann die Authentifizierung des Benutzers auch durch das Auflegen einer oder beider Hände auf das Sensorfeld 10 erfolgen. Einfachheitshalber wird im Folgenden ausschließlich von einem oder mehreren Fingern 11 des Benutzers gesprochen, wenngleich auch eine Authentifizierung über biometrische Merkmale der Daumen oder Hände erfolgen kann.

Über das Sensorfeld 10 der Authentifizierungseinrichtung 11 werden zum Authentifizieren des Benutzers ein oder mehrere biometrische Merkmale des Benutzers eingelesen. Dieses biometrische Merkmal stellt insbesondere der Fingerabdruck eines oder mehrerer Finger 11 des Benutzers dar. Neben dem Fingerabdruck können als biometrische Merkmale jedoch auch dessen Handvenenstruktur, Handlinienstruktur, Handgeometrie oder vergleichbare biometrische Merkmale verwendet werden. Anhand des eingelesenen biometrischen Merkmals kann eine erste Überprüfung der Berechtigung des Benutzers zum Bedienen der technischen Einrichtung 14 durch die Authentifizierungseinrichtung 11 oder die technische Einrichtung 14 durchgeführt werden.

Zusätzlich zur Authentifizierung des Benutzers durch das Einlesen der biometrischen Merkmale erfolgt ein Ausführen einer Geste 13 auf dem Sensorfeld 10 der Authentifizierungseinrichtung 11 durch den Benutzer. Diese Geste 13 kann dabei als weitere Überprüfung der Berechtigung des Benutzers verwendet werden, indem die Geste 13 eine nur dem Benutzer selbst bekannte Geste 13 darstellt. Dadurch wird die Sicherheit der Zugangsberechtigung zur technischen Einrichtung 14 zusätzlich zum erforderlichen biometrischen Sicherheitsmerkmal weiter erhöht.

Die Geste 13 kann eine bestimmte Ausrichtung, Anordnung oder Positionierung des Fingers 12 auf dem Sensorfeld 10 der Authentifizierungseinrichtung 11 darstellen. Beispielsweise kann dabei vorgesehen sein, dass der Finger 12 um 90° versetzt, in einer horizontalen Richtung auf dem Sensorfeld 10 aufgesetzt werden muss, um authentifiziert zu werden. Ebenso kann vorgesehen werden, dass der Finger 12 auf einen bestimmten, definierten Bereich des Sensorfelds 10 aufgesetzt werden muss. Indem nur dem Benutzer bekannt ist, in welcher Ausrichtung, Anordnung oder Positionierung der Finger 12 auf dem Sensorfeld 10 aufzusetzen ist, kann die Sicherheit der Authentifizierung zusätzlich erhöht werden. Dies gilt ebenso für die nachfolgend beschriebenen Gesten 13.

Alternativ oder ergänzend kann die Geste 13 als eine definierte Bewegung des Fingers 12 auf dem Sensorfeld 10 ausgeführt werden. Eine solche Bewegung kann beispielsweise als horizontale, vertikale, diagonale, kreisförmige, rotatorische oder auch als komplexe, beispielsweise einem bestimmten Muster entsprechende Wischbewegung auf dem Sensorfeld 10 erfolgen.

Darüber hinaus kann die Geste 13 durch eine bestimmte zeitliche Dauer des Auflegens des Fingers 12 auf dem Sensorfeld 10 definiert werden. Beispielsweise kann die Geste 13 dabei durch ein Auflegen des Fingers 12 auf das Sensorfeld 10 der Authentifizierungseinrichtung 11 für eine Dauer von drei Sekunden erfolgen. Diese Geste 13 wäre zum Beispiel unterscheidbar zu einer alternativen Geste 13, die durch ein Auflegen des Fingers 12 auf das Sensorfeld 10 für eine kürzere oder längere Zeitdauer erfolgt.

Als weitere Möglichkeit kann die Geste 13 durch ein einfaches oder durch ein wiederholtes Antippen des Sensorfelds 10 mit dem Finger 12 gebildet werden. Dabei kann durch die Variation der Zeitdauer des Antippens, also des Aufliegens des Fingers 12 auf dem Sensorfeld 10, eine Geste 13 in der Art eines Morsecodes ausgestaltet werden. Beispielsweise ein Morsecode aus der Kombination "zweimal kurz und zweimal lang" mit dem Finger 12 auf das Sensorfeld 10 tippen. Durch solche Morsecodes kann ein hoher Sicherheitsgewinn der Zugangsberechtigung erreicht werden, da durch einen solchen Morsecode eine beliebige Anzahl von Kombinationen möglich werden.

Insbesondere ist dabei vorgesehen, dass der Benutzer die Geste 13 frei definieren und in der Authentifizierungseinrichtung 11 oder der technischen Einrichtung selbst einspeichern kann.

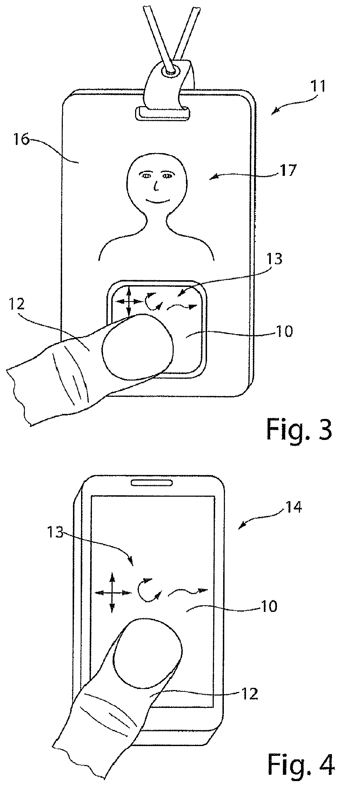

Zusätzlich zur Überprüfung der Berechtigung des Benutzers über die Geste 13, kann mit der Geste 13 eine individuelle Funktion der technischen Einrichtung 14 (Figuren 3 bis 5) verknüpft sein. Das bedeutet, dass nach erfolgreicher Authentifizierung des Benutzers aufgrund des biometrischen Merkmals und der entsprechenden Geste 13, eine zuvor definierte Betriebsfunktion oder ein bestimmtes Programm der technischen Einrichtung 14 ausgeführt wird. Die Verknüpfung der Geste 13 mit einer individuellen Funktion der technischen Einrichtung 14 kann in der Authentifizierungseinrichtung 11 oder der technischen Einrichtung 14 zuvor hinterlegt sein oder auch vom Benutzer selbst frei einprogrammiert werden. Dabei können eine Vielzahl unterschiedlicher Gesten 13 mit jeweils unterschiedlichen Funktionen der technischen Einrichtung 14 verknüpft werden. Somit wird eine sichere und gleichzeitig komfortable und schnelle Bedienung der technischen Einrichtung 14 erreicht, da durch ein einstufiges Verfahren sowohl die Berechtigung eines Benutzers überprüft als auch ein unmittelbares Ausführen einer bestimmten Funktion der technischen Einrichtung 14 angesteuert wird.

Figur 2 zeigt eine weitere schematische Darstellung des Sensorfelds 10 der Authentifizierungseinrichtung 11 mit zwei auf das Sensorfeld 10 aufgelegten Fingern 12 des Benutzers. Diese Darstellung soll verdeutlichen, dass die Authentifizierung des Benutzers nicht nur anhand eines einzelnen zuvor bestimmten Fingers 12 oder Daumens erfolgen kann, sondern auch anhand mehrerer Finger 12 oder Daumen oder anhand aller Finger 12 und Daumen des Benutzers. Im Übrigen erfolgt sowohl die Authentifizierung des biometrischen Merkmals anhand von mehreren Fingern 12 als auch das Ausführen der Geste 13 mit mehreren Fingern 12 gemäß den Ausführungen zu Figur 1.

Zusätzlich zu der Authentifizierung des Benutzers über das biometrische Merkmal nur eines Fingers 12, können durch die Verwendung mehrerer Finger 12 zusätzliche Kombinationsmöglichkeiten zur Authentifizierung verwendet werden. Dabei ist in der Authentifizierungseinrichtung 11 hinterlegt, welcher oder welche Finger 12 des Benutzers zur Authentifizierung auf das Sensorfeld 10 zu legen sind, wobei ausschließlich der Benutzer weiß, welcher seiner Finger 12 zur Authentifizierung in der Authentifizierungseinrichtung 11 hinterlegt sind. Indem die Authentifizierung davon abhängig gemacht wird, welcher Finger 12 oder wie viele Finger 12 vom Benutzer auf das Sensorfeld 10 aufgelegt werden müssen, beispielsweise nur der Zeige- und Ringfinger oder gleichzeitig der Mittel-, Ring- und kleine Finger, wird ein zusätzlicher Sicherheitsgrad zur Erlangung einer Berichtigung zur technischen Einrichtung 14 erreicht. Zudem sind dadurch weitere Kombinationsmöglichkeiten zum definieren der Geste 13 oder dem Zuordnen einer individuellen Funktion der technischen Einrichtung 14 ermöglicht, indem beispielsweise jedem Finger eine individuelle Funktion zugeordnet wird.

Figur 3 zeigt eine schematische Darstellung einer Berechtigungskarte 16 mit einer integrierten Authentifizierungseinrichtung 11 zum Authentifizieren eines Benutzers durch das zuvor beschriebene Verfahren zum Authentifizieren eines Benutzers. Eine solche Berechtigungskarte 16 wird von dem Benutzer in der Regel mitgeführt, um sich bei einer nicht näher dargestellten technischen Einrichtung zu authentifizieren oder die technische Einrichtung zu bedienen oder zu steuern. Üblicherweise wird eine solche Berechtigungskarte 16 eingesetzt, um eine Zugangsberechtigung zu einem Gebäude, einem Raum, einem Computer oder ähnlichem zu überprüfen.

Diese Berechtigungskarte 16, welche beispielsweise als Identifikationskarte, ID-Card oder Key-Card ausgestaltet ist, umfasst ein integriertes Sensorfeld 10 zum Erfassen eines oder mehrerer biometrischen Merkmale des Benutzers sowie einer auf dem Sensorfeld 10 ausgeführten Geste 13 durch den Benutzer. Das Sensorfeld 10 kann dabei als kapazitives Sensorfeld ausgebildet sein und beispielsweise flächig an oder in der Berechtigungskarte 16 integriert sein.

Das Sensorfeld 10 ist mit der in der Berechtigungskarte 16 integrierten Authentifizierungseinrichtung 11 gekoppelt. Dadurch ist es ermöglicht, dass eine Überprüfung der Berechtigung des Benutzers ausschließlich durch die integrierte Authentifizierungseinrichtung 11 erfolgt. Das Erfassen der biometrischen Merkmale und der Geste 13 des Benutzers sowie die Authentifizierung bzw. der Vergleich dieser Daten mit den in der Authentifizierungseinrichtung 11 gespeicherten Referenzdaten erfolgt somit ausschließlich durch die Berechtigungskarte 16. An die technische Einrichtung werden lediglich Informationen gesendet, die eine Aussage über eine erfolgreiche oder nicht erfolgreiche Authentifizierung des Benutzers zulassen. Folglich werden keine Daten bezüglich der biometrischen Merkmale des Benutzers oder der ausgeführten Geste an die technische Einrichtung übermittelt. Dadurch wird ein hoher Schutz sensibler Daten erreicht.

Zum Austausch der Authentifizierungsdaten mit der technischen Einrichtung, kann in der Berechtigungskarte 16 eine nicht näher dargestellt Kommunikationseinrichtung integriert sein. Diese kann beispielsweise als drahtlose Kommunikationseinrichtung in Form eines RFID-Chips ausgebildet sein. Ebenso kann an der Berechtigungskarte 16 ein lesbarer Chip, ein Magnetstreifen oder ähnliches vorgesehen sein, sodass die Berechtigungskarte 16 zum Austausch der Authentifizierungsdaten in ein dafür vorgesehenes Kartenlesegerät der technischen Einrichtung eingeführt wird.

Zudem können auf der Berechtigungskarte 16 ein oder mehrere weitere Identifikationsmerkmale 17, beispielsweise ein Passbild zur visuellen Identifikation eines berechtigten Benutzers, vorgesehen werden, um neben der Authentifizierung eines Benutzers durch das zuvor beschriebene Verfahren, eine zusätzliche Überprüfung der Identität des Benutzers zu ermöglichen.

Figur 4 zeigt eine schematische Darstellung einer technischen Einrichtung 14 am Beispiel eines Smartphones, bei dem das erfindungsgemäße Verfahren zum Authentifizieren des Benutzers zum Einsatz kommt.

Das Verfahren zur Bedienung des Smartphones sieht vor, dass der Benutzer zunächst seinen Finger 12 auf das Sensorfeld 10 des Smartphones aufsetzt. Dieses Sensorfeld 10 kann beispielsweise in dem Display des Smartphones integriert sein, sodass zum Erfassen des Fingerabdrucks des Fingers 12, dieser lediglich auf das Display des Smartphones aufgelegt werden muss. Anschließend führt der Benutzer eine entsprechende Geste 13 zuvor beschriebener Art aus. Wird die Geste 13 als zusätzliches Sicherheitsmerkmal eingesetzt, ist diese beispielsweise nur dem Benutzer bekannt, sodass ein Entsperren des Smartphones nur möglich ist, wenn der Fingerabdruck des Fingers 12 und die ausgeführte Geste 13 übereinstimmen. Gleichzeitig kann die Geste 13 mit einer bestimmten Funktion des Smartphones verknüpft sein, sodass gleichzeitig eine Funktion des Smartphones ausgeführt wird. Dies kann beispielsweise das Starten eines bestimmten Programmes, zum Beispiel das E-Mail-Programm, die Telefonfunktion oder ähnliches sein. Ebenso kann durch das Ausführen der Geste 13 ein Aktivieren einer bestimmten Benutzeroberfläche erfolgen, sodass der Benutzer beispielsweise durch eine bestimmte Geste 13 unmittelbar zu einer geschäftlichen Benutzeroberfläche gelangt oder durch eine weitere Geste 13 zu einer privaten Benutzeroberfläche.

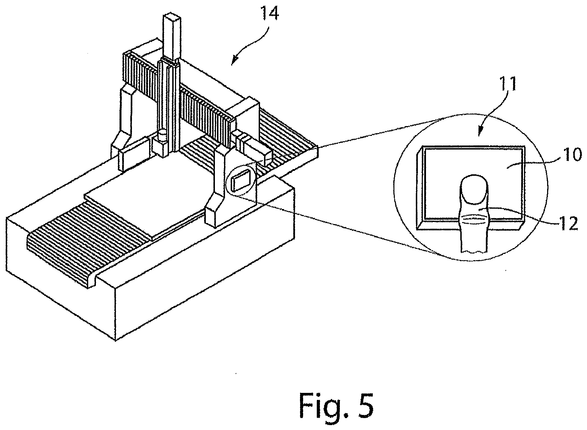

Alternativ kann dieses Verfahren beispielsweise auch bei einer Werkzeugmaschine gemäß Figur 5 eingesetzt werden, wodurch auf eine sichere und einfache Art und Weise eine Bedienung durch den Benutzer ermöglicht werden kann. Die Sicherheit ergibt sich daraus, dass durch die Überprüfung des biometrischen Merkmals und der Geste 13 nur demjenigen Benutzer die Bedienung der Werkzeugmaschine ermöglicht wird, der dazu aufgrund der übereinstimmenden Sicherheitsmerkmale autorisiert ist.

Die Einfachheit der Bedienung ergibt sich zusätzlich daraus, dass mit der Geste 13 eine oder mehrere entsprechende Betriebsfunktion der Werkzeugmaschine verknüpft sind, welche durch das Ausführen der Geste 13 unmittelbar angesteuert werden können. Ermöglicht die Werkzeugmaschine beispielsweise zwei verschiedene Arbeitsprogramme, nämlich ein schnelles Arbeitsprogramm und ein langsames Arbeitsprogramm, können diese jeweils mit einer eigenen Geste 13 verknüpft werden, sodass beispielsweise ein Wischen des Fingers 12 nach rechts, das schnelle Arbeitsprogramm der Werkzeugmaschine ansteuert und startet und ein Wischen des Fingers 12 nach links, entsprechend das langsame Arbeitsprogramm.

### Bezugszeichenliste

10. Sensorfeld
11. Authentifizierungseinrichtung
12. Finger
13. Geste
14. technische Einrichtung
15.
16. Berechtigungskarte
17. Identifizierungsmerkmal eines Benutzers

## Patentansprüche

1. Verfahren zum Authentifizieren eines Benutzers einer technischen Einrichtung (14), **dadurch gekennzeichnet, dass** zum Authentifizieren des Benutzers
- wenigstens ein biometrisches Merkmal des Benutzers durch eine Authentifizierungseinrichtung (11) erfasst wird,
- das wenigstens eine erfasste biometrische Merkmal mit einem in der Authentifizierungseinrichtung (11) hinterlegtem biometrischen Merkmal verglichen wird,
- wenigstens eine vom Benutzer ausgeführte individuelle Geste (13) durch die Authentifizierungseinrichtung (11) erfasst wird,
- die wenigstens eine erfasste individuelle Geste (13) mit einer in der Authentifizierungseinrichtung (11) hinterlegten Geste (13) verglichen wird und
- der Benutzer bei einer erfolgreichen Verifikation des wenigstens einen erfassten biometrischen Merkmals und der wenigstens einen erfassten individuellen Geste (13), eine Zugangsberechtigung zur Bedienung der technischen Einrichtung (14) erhält.

2. Verfahren nach Anspruch 1, **dadurch gekennzeichnet, dass** das wenigstens eine biometrische Merkmal des Benutzers, insbesondere ein biometrisches Merkmal wenigstens einer Hand oder wenigstens eines Fingers (12) des Benutzers, über ein Sensorfeldfeld (10) der Authentifizierungseinrichtung (11) erfasst wird und die wenigstens eine individuelle Geste (13) mit der wenigstens einen Hand oder dem wenigstens einen Finger (12) des Benutzers auf dem Sensorfeldfeld (10) der Authentifizierungseinrichtung (11) ausgeführt wird.

3. Verfahren nach Anspruch 1 oder 2, **dadurch gekennzeichnet, dass** die wenigstens eine individuelle Geste (13) mit zumindest einer individuellen Funktion der technischen Einrichtung (14) verknüpft ist und durch das Ausführen, Erfassen und erfolgreiche Verifizieren der wenigstens einen individuellen Geste (13), die zumindest eine verknüpfte individuelle Funktion der technischen Einrichtung (14) angesteuert wird.

4. Verfahren nach einem der vorhergehenden Ansprüche, **dadurch gekennzeichnet, dass** die wenigstens eine individuelle Geste (13) durch eine definierte Zeitdauer des Auflegens der wenigstens einen Hand oder des wenigstens einen Fingers (12) des Benutzers auf das Sensorfeldfeld (10) der Authentifizierungseinrichtung (11) ausgeführt wird.

5. Verfahren nach einem der vorhergehenden Ansprüche, **dadurch gekennzeichnet, dass** die wenigstens eine individuelle Geste (13) durch ein Auflegen der wenigstens einen Hand oder des wenigstens einen Fingers (12) des Benutzers in einer definierten Ausrichtung, Position und/oder Anordnung auf dem Sensorfeldfeld (10) der Authentifizierungseinrichtung (11) ausgeführt wird.

6. Verfahren nach einem der vorhergehenden Ansprüche, **dadurch gekennzeichnet, dass** die wenigstens eine individuelle Geste (13) durch eine definierte Wisch- oder Drehbewegung, insbesondere eine horizontale, vertikale, diagonale, kreisförmige oder komplexe Wischbewegung, oder eine Kombination aus einer solchen Wisch- und Drehbewegung mit der wenigstens einen Hand oder dem wenigstens einen Finger (12) des Benutzers auf dem Sensorfeldfeld (10) der Authentifizierungseinrichtung (11) ausgeführt wird.

7. Verfahren nach einem der vorhergehenden Ansprüche, **dadurch gekennzeichnet, dass** die wenigstens eine individuelle Geste (13) durch ein wiederholtes Berühren des Sensorfeldfeldes (10) der Authentifizierungseinrichtung (11) mit der wenigstens einen Hand oder dem wenigstens einen Finger (12) des Benutzers ausgeführt wird.

8. Verfahren nach einem der vorhergehenden Ansprüche, **dadurch gekennzeichnet, dass** das Erfassen des biometrischen Merkmals der wenigstens einen Hand oder des wenigstens einen Fingers (12) des Benutzers und das Erfassen der wenigstens einen individuellen Geste (13) in einer Aufsetzbewegung auf dem Sensorfeldfeld (10) der Authentifizierungseinrichtung (11) erfolgt.

9. Verfahren nach einem der vorhergehenden Ansprüche, **dadurch gekennzeichnet, dass** das Erfassen des biometrischen Merkmals der wenigstens einen Hand oder des wenigstens einen Fingers (12) des Benutzers und das Erfassen der wenigstens einen individuellen Geste (13) simultan auf dem Sensorfeldfeld (10) der Authentifizierungseinrichtung (11) erfolgt.

10. Verfahren nach einem der vorhergehenden Ansprüche, **dadurch gekennzeichnet, dass** mehrere individuelle Gesten (13), vorzugsweise vom Benutzer frei definierbar, in der Authentifizierungseinrichtung (11) oder der technischen Einrichtung (14) gespeichert werden und vorzugsweise jede individuelle Geste (13) mit jeweils einer individuellen Funktion der technischen Einrichtung (14) verknüpft wird.

11. Verwendung einer Authentifizierungseinrichtung (10) zum Authentifizieren wenigstens eines Benutzers einer technischen Einrichtung (14), insbesondere einer in einer Berechtigungskarte (16), einem Computer, einem Mobile Device, einem Wearable Computer, einer Werkzeugmaschine oder einem Kraftfahrzeug integrierten Authentifizierungseinrichtung (10), **dadurch gekennzeichnet, dass** die Authentifizierung des wenigstens einen Benutzers gemäß des Verfahrens nach einem der Ansprüche 1 bis 10 erfolgt.
